# EUROPEAN PATENT SPECIFICATION

(11) **EP 1 319 488 B1**
(45) Date of publication and mention of the grant of the patent: **02.11.2011**
(21) Application number: 02027858.6
(22) Date of filing: 12.12.2002
(51) Int. Cl.: B29B 15/12, D06M 15/693

(54) **Method for manufacturing a polymeric coated bias fabric**
Verfahren zum Herstellen eines polymerbeschichteten Bias-Gewebes
Procédé pour la fabrication d'un tissu en biais revêtu de polymère

(30) Priority: 12.12.2001 KR 2001078605
(43) Date of publication of application: 18.06.2003
(73) Proprietor: Sohn, You-Surk, Busan (KR)
(72) Inventor: Sohn, You-Surk, Busan (KR)
(74) Representative: von Samson-Himmelstjerna, Friedrich

(56) References cited:
- US-A- 4 035 218
- US-A- 4 169 007
- US-A- 4 238 530
- US-A- 4 753 823

## Description

The present invention relates to a method for manufacturing a polymeric-coated bias fabric.

A polymeric (or polymer)-coated bias fabric has been widely used in manufacturing, e.g., power transmission belts such as v-belts, and bicycle tires, to improve wear-resistance and elasticity thereof.

Such polymer-coated bias fabric is obtained by first spirally cutting a tubular woven fabric with a certain width at about 45° angle with respect to its longitudinal axis, thereby forming a bias fabric, which is wound on a reel. Then through a coating process, a polymeric layer is formed on the bias fabric. US 4,169,007 and US 4,035,218 describe related apparatuses for producing double face corrugated board and releasable laminates, respectively.

US 4,753.825 and US 4,238,530 describe methods for producing elastomer-coated bias fabreses. However, such polymer-coated bias fabric fabricated by the conventional apparatus and method suffers from poor elasticity. Specifically, the tensile force which acts on the bias fabric as the fabric is pulled by a take-up reel during the polymer coating process longitudinally elongates the bias fabric. And as a result, the final product, i.e, polymer-coated bias fabric, that has undergone such coating process yields poor elasticity.

It is therefore, an object of the present invention to provide a method for manufacturing a polymer-coated bias fabric, in which a bias fabric thereof is not elongated, thereby improving elasticity thereof.

This object is achieved by a method according to claim 1. The dependent claims refer to preferred embodiments of the invention.

In accordance with an example illustrating the invention, there is provided an apparatus for manufacturing a polymer-coated bias fabric, including: a first supply reel for supplying first material strip; a take-up reel for winding the first material strip drawn from the first supply reel; a polymeric material coating device for coating a polymeric layer on an upper surface of the first material strip; a second supply reel for supplying a second material strip on top of the polymeric layer coated on the first material strip; a pressing device for pressing the second material strip onto the polymeric layer on the first material strip; and a drying device for drying the polymeric layer between the first and the second material strips.

In accordance with an aspect of the invention, there is provided a method for manufacturing a polymer-coated bias fabric, comprising the steps of: drawing a first strip material from a first supply reel; coating a polymeric layer on the first material strip; supplying a second material strip onto the polymeric layer coated on the first material strip; pressing the second material strip onto the polymeric layer coated on the first material strip; and drying the polymeric layer coated between the first and the second material strips to form a first stage product.

The above and other objects and features of the present invention will become apparent from the following description of preferred embodiments given in conjunction with the accompanying drawings, in which:
Fig. 1 offers a side schematic view of an apparatus for manufacturing a polymer-coated bias fabric in accordance with the preferred embodiment of the present invention; and
Fig. 2A and 2B illustrate longitudinal cross sectional views of a first and second polymer-coated strips, respectively.

An apparatus and method for manufacturing a polymer-coated fabric will now be described with reference to the accompanying drawings.

Referring to Fig. 1, there is illustrated an apparatus 100 for manufacturing a polymer-coated bias fabric in accordance with the preferred embodiment of the present invention. The apparatus 100 includes a first supply reel 10 for supplying a strip of carrier paper 15; a take-up reel 50 for winding the carrier paper 15 drawn from the supply reel 10; a roll coater 20 for coating a first polymeric material on the carrier paper 15, forming a first polymeric layer 3; a conveyor device 60 for transferring the carrier paper 15 thereon while supporting it on the bottom; a second supply reel 30 for supplying a strip of bias fabric 35 onto the first polymeric layer 3; a guide roller 65 disposed above the transferring device 60 for pressing the bias fabric 35 onto the polymeric layer 3; and a drying device 40 for drying the polymeric layer 3 formed between the carrier paper 15 and the bias fabric 35.

In this preferred embodiment, the strip of bias fabric 35 is obtained by spirally cutting a tubular woven fabric, e.g., polyester and cotton composite, at about 45° angle with respect to its longitudinal axis having a specified width.

As for the carrier paper 15, a strip of peeling paper is used, which is made by coating, e.g., a polyethylene laminated vellum (or paper) strip with silicone, wherein the weight of the vellum is about 70 ∼ 80 g/m². However, other materials capable of withstanding tensile force induced by the take-up reel 50, i.e., without being longitudinally elongated, can be selected as the carrier paper 15.

The polymeric material applied by the roll coater 20 is, e.g., natural rubber dissolved in a solvent such as toluene, whose viscosity is about 4000 cPs. The roll coater 20 forms the first polymeric layer 3 having a thickness of about 40 µm on the carrier paper 15. The carrier paper 15 drawn by the take-up reel 50 exits from the roll coater 20 toward the conveyor device 60 at a speed of, e.g., about 4 m/min to 5 m/min.

The second supply reel 30 disposed above the first supply reel 10 is provided with a driving device 70 to control the speed at which the bias fabric is supplied onto the first polymeric layer 3, so that its speed is substantially equivalent to that of the carrier paper 15, while being processed by the guide roller 65.

In addition, since the uncured first polymeric layer 3 is wet and sticky, the bias fabric 35 supplied onto the first polymeric layer 3 is attached thereto and transferred therewith on the conveyor device 60. Accordingly, since the bias fabric 35 is supplied to the first polymeric layer 3 at the same speed as the substantially inelastic carrier paper 15, the tensile force induced by the take-up reel 50 previously acts on the carrier paper 15.

Above the conveyor device 60 is installed the guide roller 65 which presses the bias fabric 35 onto the carrier paper 15 so that the first polymeric layer 3 therebetween is absorbed and impregnated in the bias fabric 35. At this time, the bias fabric 35 and the carrier paper 15 on the conveyor device 60 are transferred to the drying device 40.

The drying device 40 is preferably divided into three sections, i.e., a preheating section 40a, a drying section 40b and a cooling section 40c. Hot air at about 40 °C to 50 ° C is supplied into the preheating section 40a, thereby raising the temperature of the first polymeric layer 3, whereas in the drying portion 40b, hot air at about 80 °C to 110 °C is supplied thereinto, so that the first polymeric layer 3 is dried. Such preheating of the first polymeric layer 3 prior to drying suppresses the formation of bubbles therein. Finally, the hot air at about 60 °C to 70 °C is supplied into the cooling section 40c thereby gradually cooling the first polymeric layer 3. The drying device 40 is provided with an exhaust outlet (not shown) for releasing the hot air supplied by the preheating, drying and cooling portions 40a, 40b, 40c.

The carrier paper containing the polymeric layer and the bias fabric are wound by the take-up reel 50. However, as illustrated above, since the bias fabric 35 supplied by the second supply reel 30 onto the first polymeric layer 3 is supplied at the same speed as that of the carrier paper 15, the bias fabric 35 does not experience the tensile force induced by the take-up reel 50. Accordingly, the longitudinal elongation of the bias fabric 35 is prevented. As a result, such a final product, i.e., the first stage polymer-coated bias fabric, retains its original elasticity, which were lost in a conventionally manufactured polymer-coated bias fabric.

The first stage product of the polymer-coated bias fabric 55a (shown in Fig. 2A) manufactured as described above is further processed, based on the nature of the product specification. First it is provided in the first supply reel 10 and then supplied to the roll coater 20 drawn by the take-up reel 50. At which time, the bias fabric 35 of the first stage polymer-coated bias fabric 55a is disposed on the carrier paper 15, so that a second polymeric layer is applied on top of the bias fabric 35 of the first stage polymer-coated bias fabric 55a, to form a second polymeric layer 3a (shown in Fig. 2B) having a thickness of about 10 µm to 15.

More specifically, the viscosity of the polymeric material of the second polymeric layer is preferably about 5000 cPs, which is greater than that of the first polymeric layer. The second polymeric material, which has lesser amount of the solvent such as toluene added to the natural rubber in order to suppress the bubble formation in the second polymeric layer 3a, has higher viscosity than that of the first polymeric material.

In addition, in an effort to further reduce the amount of bubbles trapped in the second polymeric layer 3a, the thickness thereof is set to be less than that of the first polymeric layer 3 on the carrier paper 15. The bias fabric 35 has been disposed on and pressed onto the first polymeric layer 3, so that the bubbles trapped in the first polymeric layer 3 can be released through the bias fabric 35. Accordingly, the thickness of the first polymeric layer 3 can be set to be greater than that of the second polymeric layer 3a.

A second stage polymeric bias fabric 55b (shown in Fig. 2B) made as described above is transferred from the roll coater 20 to the transferring device 60 at a speed greater than the processing speed of the first stage polymeric bias fabric 55a under the same drying conditions since the second polymeric layer 3a is thinner than the first polymeric layer 3 and contains lesser toluene content.

In comparison with the first stage polymer-coated bias fabric, supplying of any material by the second supply reel 30 during the processing of the second stage polymer-coated bias fabric 55b is suspended. In addition, also at this time the guide roller 65 is at a rest position where it does not come into contact with the second polymeric layer 3a of the second stage polymer-coated bias fabric 55b.

After passing through the transferring device 60, the second stage polymer-coated bias fabric 55b enters the drying device 40, where it is dried. Then it is wound on the take-up reel 50, similar to the first stage polymer-coated bias fabric fabricating process.

The second stage polymeric-coated bias fabric 55b, which also can be used as a final product may repeat the polymer coating process as illustrated above until the desired thickness of the polymeric layers is achieved on the bias fabric 35.

During the second polymer coating process, the tensile force, which drives the supply reel, acts on the substantially inelastic carrier paper 15, thereby the bias fabric 35 drawn from the supply reel 10 to the take-up reel 50 is not elongated, retaining its original elasticity, further improving the overall elasticity of the polymer-coated bias fabric.

The final product of the polymer-coated bias fabric is processed to meet the product specification, e.g., cutting into desired dimensions and removing the carrier paper 15 prior to manufacturing power transmission belts, bicycle tires, and etc.

It should be noted that the preferred embodiment described above could be modified without departing from the scope of the present invention.

For instance, other strips of material, which are substantially inelastic and can withstand, i.e., producing no elongation, tensile force induced by the take-up reel 50, can be used as the carrier paper 15. Although it is preferable that the carrier paper 15 be inelastic, since such material yields higher quality product, elastic material may be elected without departing from the principles of the present invention. Since the tensile force, regardless of the material selected, acts on the carrier paper 15 rather than the bias fabric 35, such use of elastic material does not compromise the principles of the present invention.

In addition, the first and second polymeric layers 3, 3a of the preferred embodiment, which strictly differ in thickness and viscosity, however, may be replaced with different material, each layer having a different material composition.

Other modifications may include, for example, the drying device having three sections may be merged, e.g., into two sections, and rather than supplying hot air, a radiator may be employed.

In addition, the conveyor device 60 may be installed throughout the entire production line so that the polymer-coated bias fabric, suspended in parts of the process is supported throughout the process.

While the invention has been shown and described with respect to the preferred embodiments, it will be understood by those skilled in the art that various changes and modifications may be made without departing from the scope of the invention as defined in the following claims.

## Claims

1. A method for manufacturing a polymer-coated bias fabric, comprising the steps of:
drawing a first material strip (15) from a first supply reel (10);
coating a polymeric layer (3) on the first material strip (15);
supplying a second material strip (35) onto the polymeric layer (3) coated on the first material strip (15);
pressing the second material strip (35) onto the polymeric layer (3) coated on the first material strip (15); and
drying the polymeric layer (3) coated between the first (15) and the second (35) material strips to form a first stage product (55a),
wherein the second material strip (35) is a bias fabric, and
wherein the second material strip (35) is supplied on top of the polymeric layer (3) deposited on the first material strip (15) at the speed substantially equivalent to that of the first material strip (15).

2. The method for manufacturing a polymer-coated bias fabric of claim 1, further comprising:
depositing a polymer layer (3a) on the second material strip (35), wherein a thickness of the polymer layer (3a) is less than that of the polymeric layer (3).

3. The method for manufacturing a polymer-coated bias fabric of claim 2, wherein the viscosity of the polymer layer (3a) is greater than that of the polymeric layer (3).

4. The method for manufacturing a polymer-coated bias fabric of claim 2, wherein the polymer layer (3a) and the polymeric layer (3) differ in material composition.

5. The method for manufacturing a polymer-coated bias fabric of claim 1, wherein the first material strip (15) is a strip of paper which is substantially inelastic.

6. The method for manufacturing a polymer-coated bias fabric of claim 1, wherein in the step of drying the polymeric layer, a preheating process, a drying process and a cooling process for supplying hot air to the polymeric layer are performed, wherein a temperature of the hot air supplied during the cooling process is greater than that supplied during the preheating process, but less than that supplied during the drying process.

7. The method for manufacturing a polymer-coated bias fabric of claim 6, wherein the temperature of the hot air supplied during the preheating process, during the drying process, and during the cooling process are in the range of about 40°C to about 50°C, in the range of about 80°C to about 100°C, and in the range of about 60°C to about 70°C, respectively.

## Patentansprüche

1. Verfahren zum Herstellen eines polymerbeschichteten Bias Gewebes, umfassend die Schritte:
Ziehen eines ersten Materialstreifens (15) aus einer ersten Zuführhaspel (10);
Beschichten der ersten Materialstreifens (15) mit einer Polymerschicht (3);
Zuführen eines zweiten Materialstreifens (15) auf die Polymerschicht (3), die auf dem ersten Materialstreifen (15) aufgebracht ist;
Pressen des zweiten Materialstreifens (35) auf die Polymerschicht (3), die auf den ersten Materialstreifen (15) aufgebracht ist;
Trocknen der Polymerschicht (3), die zwischen dem ersten (15) und dem zweiten (15) Materialstreifen aufgebracht ist, um ein Produkt (55a) erster Stufe zu bilden,
wobei der zweite Materialstreifen (35) ein Bias Gewebe ist, und
wobei der zweite Materialstreifen (35) oben auf die Polymerschicht (3), die auf dem ersten Materialstreifen (15) abgeschieden ist, mit einer Geschwindigkeit zugeführt wird, die im Wesentlichen gleich derjenigen des ersten Materialstreifens (15) ist.

2. Verfahren zum Herstellen eines polymerbeschichteten Bias Gewebes nach Anspruch 1, weiter umfassend:
Abscheidend einer Polymerschicht (3a) auf dem zweiten Materialstreifen (35), wobei eine Dicke der Polymerschicht (3a) kleiner als die der Polymerschicht (3) ist.

3. Verfahren zum Herstellen eines polymerbeschichteten Bias Gewebes nach Anspruch 2, wobei die Viskosität der Polymerschicht (3a) größer als die der Polymerschicht (3) ist.

4. Verfahren zum Herstellen eines polymerbeschichteten Bias Gewebes nach Anspruch 2, wobei sich die Polymerschicht (3a) und die Polymerschicht (3) in der Materialzusammensetzung unterscheiden.

5. Verfahren zum Herstellen eines polymerbeschichteten Bias Gewebes nach Anspruch 1, wobei der erste Materialstreifen (15) ein Papierstreifen ist, der im Wesentlichen unelastisch ist.

6. Verfahren zum Herstellen eines polymerbeschichteten Bias Gewebes nach Anspruch 1, wobei bei dem Schritt des Trocknens der Polymerschicht ein Vorerwärmungsprozess, ein Trocknungsprozess und ein Kühlprozess zum Zuführen von heißer Luft auf die Polymerschicht ausgeführt werden, wobei eine Temperatur der während des Kühlprozesses zugeführten heißen Luft größer ist als diejenige der heißen Luft, die während des Vorerwärmungsprozesses zugeführt wird, aber kleiner als diejenige der heißen Luft ist, die während des Trocknungsprozesses zugeführt wird.

7. Verfahren zum Herstellen eines polymerbeschichteten Bias Gewebes nach Anspruch 6, wobei die Temperatur der heißen Luft, die während des Vorerwärmungsprozesses, während des Trocknungsprozesses und während des Kühlprozesses zugeführt wird, entsprechend in dem Bereich von ungefähr 40 C bis ungefähr 50 °C, entsprechend in dem Bereich von ungefähr 80 C bis ungefähr 100 °C und entsprechend in dem Bereich von ungefähr 60 C bis ungefähr 70 °C liegt.

## Revendications

1. Méthode de fabrication d'un tissu en biais revêtu d'un polymère, comprenant les étapes suivantes :
► étirage d'une première bande de matériau (15) provenant d'une première bobine d'alimentation (10) ;
► application d'une couche polymère (3) sur la première bande de matériau (15) ;
► fourniture d'une seconde bande de matériau (35) sur la couche polymère (3) appliquée sur la première bande de matériau (15) ;
► compression de la seconde bande de matériau (35) sur la couche polymère (3) appliquée sur la première bande de matériau (15) ; et
► séchage de la couche polymère (3) appliquée entre les première (15) et seconde (35) bandes de matériau pour former un produit du premier stade (55a),
dans laquelle la seconde bande de matériau (35) est un tissu en biais, et
dans laquelle la seconde bande de matériau (35) est alimentée sur la couche polymère (3) déposée sur la première bande de matériau (15) à une vitesse essentiellement équivalente à celle de la première bande de matériau (15).

2. Méthode de fabrication d'un tissu en biais revêtu d'un polymère selon la revendication 1, comprenant en outre le dépôt d'une couche de polymère (3a) sur la seconde bande de matériau (35), où l'épaisseur de la couche de polymère (3a) est inférieure à celle de la couche polymère (3).

3. Méthode de fabrication d'un tissu en biais revêtu d'un polymère selon la revendication 2, dans laquelle la viscosité de la couche de polymère (3a) est supérieure à celle de la couche polymère (3).

4. Méthode de fabrication d'un tissu en biais revêtu d'un polymère selon la revendication 2, dans laquelle la couche de polymère (3a) et la couche polymère (3) diffèrent en termes de composition de matériau.

5. Méthode de fabrication d'un tissu en biais revêtu d'un polymère selon la revendication 1, dans laquelle la première bande de matériau (15) est une bande de papier qui est essentiellement non élastique.

6. Méthode de fabrication d'un tissu en biais revêtu d'un polymère selon la revendication 1, dans laquelle, dans l'étape de séchage de la couche polymère, un procédé de préchauffage, un procédé de séchage et un procédé de refroidissement pour fournir de l'air chaud à la couche polymère sont réalisés, dans laquelle la température de l'air chaud fourni pendant le procédé de refroidissement est supérieure à celle fournie pendant le procédé de préchauffage, mais inférieure à celle fournie pendant le procédé de séchage.

7. Méthode de fabrication d'un tissu en biais revêtu d'un polymère selon la revendication 6, dans laquelle les températures de l'air chaud fourni pendant le procédé de préchauffage, pendant le procédé de séchage et pendant le procédé de refroidissement sont respectivement dans la plage d'environ 40°C à environ 50°C, dans la plage d'environ 80°C à environ 100°C et dans la plage d'environ 60°C à environ 70°C.
